(19) Europäisches Patentamt
European Patent Office
Office européen des brevets

(11) **EP 4 270 100 A1**

(12) **EUROPEAN PATENT APPLICATION**

(43) Date of publication:
**01.11.2023 Bulletin 2023/44**

(21) Application number: **22169881.4**

(22) Date of filing: **26.04.2022**

(51) International Patent Classification (IPC):
**G02F 1/01** *(2006.01)*     **G02F 1/015** *(2006.01)*

(52) Cooperative Patent Classification (CPC):
**G02F 1/0136; G02F 1/015; G02F 1/0154;
G02F 1/0155**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Imec VZW
3001 Leuven (BE)**

(72) Inventors:
 • **Haffner, Christian
   3000 Leuven (BE)**
 • **Merckling, Clement
   1150 Woluwe-Saint-Pierre (BE)**
 • **De Greve, Kristiaan
   3001 Heverlee (BE)**

(74) Representative: **Roth, Sebastian
   Mitscherlich PartmbB
   Patent- und Rechtsanwälte
   Karlstraße 7
   80333 München (DE)**

(54) **AN INTEGRATED ELECTRO-OPTICAL ABSORPTION MODULATOR**

(57) The present disclosure is related to an integrated electro-optical absorption modulator. A two-dimensional (2D) material is employed for forming electrodes of the modulator, and a material with a non-zero off-diagonal electro-optic tensor coefficient may be employed for forming a waveguide core of the modulator. The modulator comprises a cladding, a waveguide core arranged at least partly in the cladding to guide light, and a first electrode and a second electrode arranged on opposite sides of the waveguide core. Each electrode is formed of the 2D material on a surface of the cladding or in the cladding, and extends into the waveguide core. The electrodes are configured to apply an electric field across a modulation region of the waveguide core, and thereby to convert at least a part of the energy of the light in the modulation region between two orthogonal modes, wherein one of the two orthogonal modes is polarized perpendicular to the plane of the 2D material.

**FIG. 1**

EP 4 270 100 A1

## Description

TECHNICAL FIELD

The present disclosure is related to an integrated electro-optical absorption modulator. A two-dimensional (2D) material is employed for forming electrodes of the modulator, and a material with a non-zero off-diagonal electro-optic tensor coefficient may be employed for forming a waveguide core of the modulator.

BACKGROUND

Electro-optical modulators are at the heart of today's information technology, as these modulators represent gateways between electronics for computation and optics for communication. In the past, the application of electro-optical modulators was limited to long-haul communications, while high cost, large footprint, and high energy consumptions prevented their application to short reach distance communication.

In the meantime integrated electro-optical modulator technologies have enabled also optical communications over much shorter communication channels, for instance, within datacenters. However, even shorter communication distances are now targeted, such as chip-2-chip communications. Thus, the current research focuses on steadily improving the electro-optical modulator technologies, which means particularly achieving low optical insertion loss (IL), low driving voltages, and a compact footprint to reduce cost.

Conventionally, two major electro-optical modulation techniques are applied. The first technique is based on shifting the phase of an optical signal by applying a voltage via the Pockels effect or the free carrier dispersion effect. This phase shift allows utilizing constructive and destructive interference to modulate light within, for example, a Mach Zehnder interferometer or an optical resonator configuration. The performance metric for this modulation technique is the voltage-length-loss product ($\alpha UL$ [VdB]) - wherein $U$ is the voltage applied for effecting the modulation and L is length of the modulation region in which light is modulated - and the voltage-length-product ($UL$ [Vm]), respectively. The former product quantifies the trade-off between optical loss (in dB) and driving voltage U (in V), while the latter product indicates the trade-off between device footprint (depending on the length $L$, in $\mu$m) and the driving voltage $U$ (in V). The ideal technology should feature as low as possible values for both products. Conventional inorganic Pockels modulators feature $UL$ of a few Vmm to a few Vcm, while the voltage-length-loss product is on the order of one VdB. However, their large footprint prevents a dense large-scale integration, as it will be needed for short-distance and high-throughput communication channels. A further miniaturization could be achieved by applying a reduced electrode spacing, however, this would come at the cost of intolerable optical loss.

The second technique is based on a voltage induced change of the material absorption by utilizing the free-carrier dispersion effect, or epsilon near zero materials, or 2D materials, or the Franz Keldish effect, or the Quantum confined Stark effect. While such modulators typically feature micron-scaled footprints, they suffer from a unity ratio between the signal's extinction ratio (ER) and insertion loss (IL). Furthermore, their wavelength operation window is limited to a few 10's of nanometers for the most prominent solution based on the Franz Keldish effect and Quantum confined Stark effect.

SUMMARY

In view of the above, an objective of this disclosure is to realize an electro-optical modulator, which has a compact footprint, which is suitable for broadband operations, which shows low insertion loss, and which requires a low-driving voltage. In particular, the electro-optical modulator envisaged by this disclosure should have a low voltage-length-loss product and/or a low voltage-length product. Another goal of this disclosure is to provide the electro-optical modulator with a large ratio between the extinction ratio and the insertion loss

These and other objectives are achieved by the solutions of this disclosure as provided in the independent claims. Advantageous implementations are defined in the dependent claims.

A first aspect of this disclosure provides an integrated electro-optical absorption modulator comprising: a cladding; a waveguide core arranged at least partly in the cladding and configured to guide light along an extension direction of the waveguide core; and a first electrode and a second electrode arranged on opposite sides of the waveguide core and each formed of a 2D material on a surface of the cladding or in the cladding; wherein each of the first electrode and the second electrode extends into the waveguide core; and wherein the first electrode and the second electrode are configured to apply an electric field across a modulation region of the waveguide core, and thereby to convert at least a part of the energy of the light in the modulation region between two orthogonal modes, wherein one of the two orthogonal modes is polarized perpendicular to the plane of the 2D material.

The waveguide core may protrude from the cladding or may be embedded in the cladding. When the waveguide core is embedded in the cladding, i.e., when it is fully arranged in the cladding, the 2D material may be also formed in the cladding. The 2D material maybe a material that has a strong anisotropic response, wherein the response is metallic or semiconducting in-plane of the plane of the 2D material and is dielectric or isolating out-of-plane of the plane of the 2D material. The 2D material may be fabricated by atomic layer deposition, printing or transferred from a seed wafer. The 2D material can be single-layered or multi-layered. That is, the first electrode and/or the second electrode may be formed by one layer of the 2D material or may be formed by multiple layers of the 2D material.

Converting at least a part of the energy of the light in the modulation region between the two orthogonal modes may mean that, when the electric field is applied across the modulation region, all of the light (i.e., the entire light energy) in the modulation region is converted from a first mode to a second mode, wherein the first mode is orthogonal to the second mode. Alternatively, converting at least a part of the energy of the light in the modulation region between the two orthogonal modes may mean that only a first part of the energy of the light in the modulation region is converted from the first mode to the second mode, when the electric field is applied across the modulation region, while a second part of the energy of the light in the modulation region is not converted. For instance, only some of the light in the modulation region is mode-converted, while also some of the light in the modulation region is not mode-converted.

The orthogonal mode, which is polarized perpendicular to the plane of the 2D material (e.g., the first mode), is not affected by the 2D material, as it is polarized perpendicular to the 2D material's in-plane conductivity. This achieves limited propagation losses for this orthogonal mode, which may define the on-state of the modulator of the first aspect. The propagation losses of the other orthogonal mode maybe orders of magnitude higher. For example, the other orthogonal mode (e.g., the second mode) may be polarized in-plane of the plane of the 2D material. The higher losses of the other mode of the two orthogonal modes are beneficial, however, as it means that light is absorbed, which may define the off-state of the modulator of the first aspect.

Therefore, the use of the 2D material to form the electrodes, and the fact that the light in the modulation region can be converted between the two orthogonal modes, enables the modulator of the first aspect to have a high ratio of extinction ratio to insertion loss, for instance, of about ER/IL $\geq$ 50, particularly higher than the ratio of a conventional absorption modulator which is ER/IL $\approx$ 1. Moreover, the modulator of the first aspect has a high voltage-length product $UL$, for example, in the range of 10-100 V$\mu$m or more, particularly, compared to conventional phase modulators that have at most a $UL$ in the range of 2-20 Vmm. For the modulator of the first aspect, U may be the voltage applied to the electrodes to apply the electric field across the modulation region, and L may be the length of the modulation region.

In an implementation of the modulator, one of the two orthogonal modes is a transverse magnetic (TM) mode polarized perpendicular to a plane of the 2D material, and the other one of the two orthogonal modes is a transverse electric (TE) mode polarized in the plane of the 2D material.

That is, the electric field across the modulation region of the waveguide core can convert at least a part of the energy of the light in the modulation region between the TM mode and the TE mode. The TM mode may define the on-state and the TE mode may defined the off-state of the modulator of the first aspect.

In an implementation of the modulator, the waveguide core comprises a first material having a non-zero off-diagonal electro-optic tensor coefficient, wherein at least a part of the first material is arranged between the first electrode and the second electrode.

The first material may be arranged completely between the first electrode and the second electrode. Notably, since the first electrode and the second electrode are 2D electrodes (made of 2D material), "between the electrodes" means between the electrodes in a direction in-plane of the 2D material, for instance, in a top-view on the modulator. The planes of the first electrode and the second electrode may be the same plane. Alternatively, they could be parallel planes.

The use of the first material facilitates the conversion of at least a part of the energy of the light in the modulation region from one orthogonal mode to the other, for instance, from TM mode to TE mode, when applying a voltage to the first and second electrode to produce the electric field. The first material may be epitaxially grown.

In an implementation of the modulator, the waveguide core further comprises a second material, the second material having a similar or an identical refractive index than the first material.

The use of the second material may reduce losses for the orthogonal mode, which is polarized perpendicular to the plane of 2D material, for instance, the TM mode. The second material may be epitaxially grown.

In an implementation of the modulator, the waveguide core comprise a lower part arranged in a trench formed in the cladding and an upper part protruding from the surface of the cladding.

The lower part and the upper part may be made of the same material, for example, the first material, or of different materials, for example, the first and the second material.

In an implementation of the modulator, the first material is arranged at least in the lower part of the waveguide core; and/or the second material is arranged at least in the upper part of the waveguide core.

Such a modulator shows a very good performance, in particular, in terms of the ratio ER/IL and the product $UL$.

In an implementation of the modulator, a ratio of a height of the lower part to a height the upper part of the measured from a center of the 2D material perpendicular to the plane of the 2D material is in a range of 0.75-1.25.

The center of the 2D material the center in direction perpendicular to the 2D material plane. Notably, the 2D material may be very thin (e.g., a single atomic layer or a few atomic layers). For instance, the height of the lower part can be similar or even identical to the height of the upper part of the waveguide core. That is, the ratio of the heights may be about 0.5.

In an implementation of the modulator, the first material is barium titanate, for example, crystalline barium titanate.

This material has non-zero off-diagonal electro-optic tensor coefficients, and thus allows an efficient conversion between the two orthogonal modes.

In an implementation of the modulator, the 2D material is graphene or a material with an anisotropic behavior being dielectric out-of-plane and conductive in-plane.

This material enables an efficient implementation of the on-state and off-state of the modulator, respectively, when switching between the orthogonal modes by applying the electric field.

In an implementation of the modulator, the cladding is made of silicon oxide, a silicon-based oxide, and aluminum oxide, or a hafnium oxide.

In an implementation of the modulator, the electric field is substantially parallel to the plane of the 2D material.

In an implementation of the modulator, the TM mode and the TE mode are phase-matched on the length of the modulation region in the extension direction.

This improves the interaction between the two orthogonal modes.

A second aspect of this disclosure provides a method for fabricating an integrated electro-optical absorption modulator according to the first aspect or any implementation form thereof, the method comprising: forming the cladding and the waveguide core at least partly in the cladding; and forming the first electrode and the second electrode of the 2D material on the surface of the cladding or in the cladding.

In an implementation form of the method, the method comprises: epitaxially growing and patterning the lower part of the waveguide core on a silicon-based substrate, and encapsulating the lower part of the waveguide core with the cladding; or epitaxially growing the lower part of the waveguide core on a silicon-based substrate and into a trench of the cladding provided on the silicon-based substrate; wherein the method further comprises: forming the first electrode and the second electrode on the surface of the cladding and on a part of the lower part of the waveguide core; and growing, using a mask, the upper part of the waveguide core onto the lower part of the waveguide core and the parts of the first electrode and the second electrode formed on the lower part of the waveguide core.

Since the method of the second aspect can be used to fabricate the modulator of the first aspect, it may achieve the same advantages as described above for the modulator of the first aspect. Furthermore, the method of the second aspect is of low complexity, and can be well implemented with available tools and process flows.

BRIEF DESCRIPTION OF THE DRAWINGS

The above described aspects and implementations are explained in the following description of embodiments with respect to the enclosed drawings:

FIG. 1     shows a general embodiment of an electro-optical modulator according to this disclosure in a side-view.

FIG. 2     shows the electro-optical modulator of FIG. 1 in a top-view.

FIG. 3     shows an exemplary embodiment of an electro-optical modulator according to this disclosure in a side-view.

FIG. 4     plots power vs. propagation length of (a) the TM mode and (b) the TE mode in a modulator according to this disclosure.

FIG. 5     shows exemplary embodiments of electro-optical modulators according to this disclosure in a side-view.

FIG. 6     shows exemplary embodiments of electro-optical modulators according to this disclosure in a side-view.

FIG. 7     shows exemplary embodiments electro-optical modulators according to this disclosure in a side-view.

FIG. 8     shows a general embodiment of a method for fabricating an electrooptical modulator according to this disclosure.

FIG. 9     shows an exemplary embodiment of a method for fabricating an electro-optical modulator according to this disclosure.

FIG. 10     shows an exemplary embodiment of a method for fabricating an electro-optical modulator according to this disclosure.

FIG. 11     shows an exemplary embodiment of a method for fabricating an electro-optical modulator according to this disclosure.

DETAILED DESCRIPTION OF EMBODIMENTS

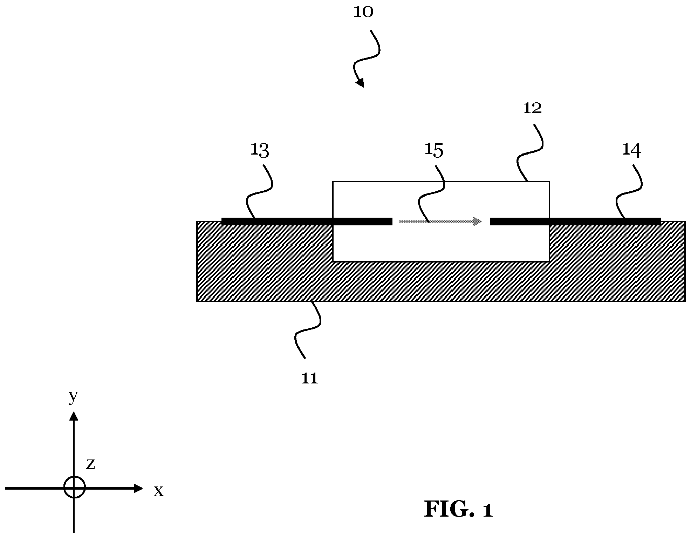

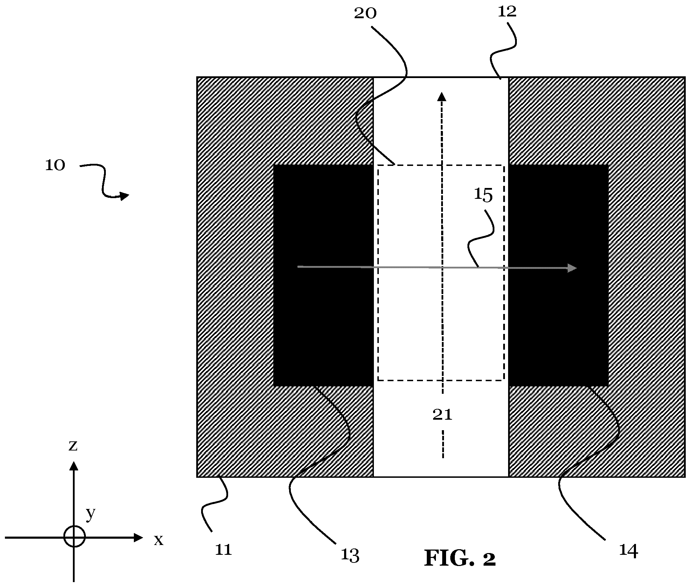

FIG. 1 shows a general embodiment of an electro-optical modulator 10 according to this disclosure in a side-view. FIG. 2 shows the same modulator 10 in a top-view. Same elements in FIG. 1 and FIG. 2 are labelled with the same reference signs. The modulator 10 is, in particular, an integrated electro-optical absorption modulator, and may be used to modulate light. The modulated light can be used for the purpose of optical communication. The modulator 10 maybe configured to convert and electrical signal with information into an optical signal including the same information.

The modulator 10 comprises a cladding 11. This cladding 11 may, for example, be made of a silicon oxide, or a silicon-based oxide, or an aluminum oxide, or a hafnium oxide.

Further, the modulator 10 comprises a waveguide core 12, wherein the waveguide core 12 is arranged at least partly in the cladding 11. For instance, the waveguide core 12 may be partly arranged in the cladding 11, i.e., a part of the cladding 11 is in the cladding 11. This also means that another part of the cladding 11 may not be arranged in the cladding, for instance, may protrude from the cladding 11. The waveguide core 12 may even be fully arranged in the cladding 11, e.g., embedded in the cladding 11, wherein the waveguide core's surface may be exposed at the cladding surface, or may be deep-embedded into the cladding 11 and surrounded completely by cladding material. In any case, the waveguide core 12 is configured to guide light along an extension direction 21 of the waveguide core 11. The extension direction 21 may be the same as the propagation direction of the light guided in the waveguide core 12. This extension direction 21 is indicated in FIG. 2, in FIG. 1 it is into the plane of the drawing. The extension direction 21 may be parallel to a z-direction of a coordinate system comprising an x-direction, y-direction, and z-direction, as indicated. The modulator 10 may built up along the y-direction.

The modulator 10 also comprises a first electrode 13 and a second electrode 14, which are respectively arranged on opposite sides of the waveguide core 12. That means, the first electrode 13 is arranged on one side of the waveguide core 12, and the second electrode 14 is arranged on the other side of the waveguide core 12. The two electrodes 13 and 14 may sandwich the waveguide core 12 in the x-direction. Each electrode 13 and 14 may extend along the extension direction 21 of the waveguide core 12 along a certain length, which defines the length of a modulation region 20 (see FIG. 2).

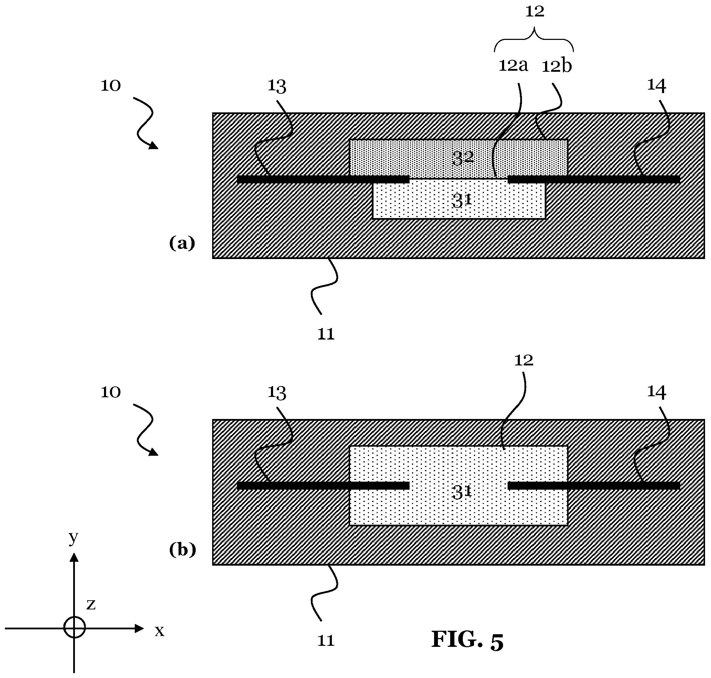

Both electrodes 13 and 14 are formed of a 2D material, wherein the 2D material is arranged on a surface of the cladding 11 (as shown in FIG. 1), or is arranged in the cladding 11 (see, e.g., FIG. 5). In particular, the 2D material maybe arranged in the cladding 11, if the waveguide core 12 is arranged at least to its largest part in the cladding 11. The 2D material may be graphene or graphene-based, or may be any suitable material that has an anisotropic behavior, in particular, dielectric out-of-plane and conductive in-plane of the plane of the 2D material. Moreover, each of the first electrode 13 and the second electrode 14 extends into the waveguide core 12 (as shown in FIG. 1). In particular, the first electrode 13 and the second electrode 14 extend into the waveguide core 12 from opposite sides of the waveguide core 12. The extension into the waveguide core 12 may be along the x-direction.

The first electrode 13 and the second electrode 14 are configured to apply an electric field 15 across the modulation region 20 of the waveguide core 12. The modulation region 20 is the region of the waveguide core 12, in which a modulation of the light that is guided in the waveguide core 12 can be affected. The electric field 15 may be substantially parallel to the plane of the 2D material, which forms the first electrode 13 and the second electrode 14, and is indicated in FIG. 1 and 2. The electric field 15 may be perpendicular to the extension direction 21, but this is not a must. Accordingly, the electric field 15 may be along the x-direction.

By applying the electric field 15 across the waveguide core 12, the first electrode 13 and the second electrode 13 are able to convert at least a part of the energy of the light in the modulation region 20 between two orthogonal modes. That is, the energy of the light, which is guided in the waveguide core 12, can be converted in the modulation region 20 between a first mode and a second mode, wherein the first mode is orthogonal to the second mode. One of the two orthogonal modes - for example, the first mode - is polarized perpendicular to the plane of the 2D material. The other mode - for example, the second mode - may be polarized in-plane of the plane of the 2D material. The first mode may be a TM mode polarized perpendicular to the plane of the 2D material, and the second mode may be a TE mode polarized in-plane of the plane of the 2D material.

The waveguide core 12 may comprise a first material, which has a non-zero off-diagonal electro-optic tensor coefficient. At least a part of the first material may be arranged between the first electrode 13 and the second electrode 14 (in the x-direction, e.g., in the top view of the modulator 10). The waveguide core 12 may comprise a Pockels material. The first material may be the Pockels material. A Pockels material is a material that allows employing the Pockels effect for modulating the light. Accordingly, the modulator 10 may be a Pockels modulator, which is based on the Pockels effect.

The Pockels effect may conventionally be modelled as a change in the refractive index

$$\Delta n = \frac{rn^3 U}{2d}$$

In the above formula, n is the refractive index (of the Pockels material, which may be used for the waveguide core of a modulator) and r represents the electro-optical coefficient (of the Pockels material). The efficiency of an electro-optical modulator based on the Pockels effect is proportional to the strength of the electric field ($U/d$), which is stronger for smaller electrode distances d (e.g., the distance between first and second electrode across the waveguide core) and for larger voltages U applied to the electrodes to generate the electric field across the waveguide core.

However, this comes at the expanse of higher propagation losses, which may be quantified by $L_{prop} \propto 1/\alpha$. Conventional Pockels modulators, which are mostly based on ferroelectrics, have an electrode spacing of a few microns. This results in a voltage length product of *UL* of about 0.2 Vcm and $L_{prop} \approx 1$ cm for a $r_{42} = 923$ pm/V.

The physical interaction behind the Pockels effect may be described by photon generation and annihilation. An applied radio frequency (RF) electric field contains photons at a frequency $\omega_{RF}$ which are mixed with an optical input field having a frequency $\omega_c$. The 2nd order nonlinearity of suitable Pockels materials enables up and down conversion of optical photons to the Stokes ($\omega_S$) and anti-Stokes ($\omega_{AS}$) side band. This conversion can encode a phase information onto the optical signal depending on the polarization of the RF electric field.

The electro-optical modulators 10 according to embodiments of this disclosure utilizes the 2D material, wherein the 2D material is specifically a conductive material, o form the first electrode 13 and the second electrode 14. Further, the modulator 10 also uses a waveguide core 12 that allows converting the light between the two orthogonal modes, e.g., a Pockels material that features a non-zero electro-optical off-diagonal coefficient (e.g. $r_{42} \neq 0$) may be used for the waveguide core 12. This type of coefficient may, for example, be found in c-axis barium titanate (BTO). Accordingly, the first material mentioned above may be barium titanate, for example, crystalline barium titanate.

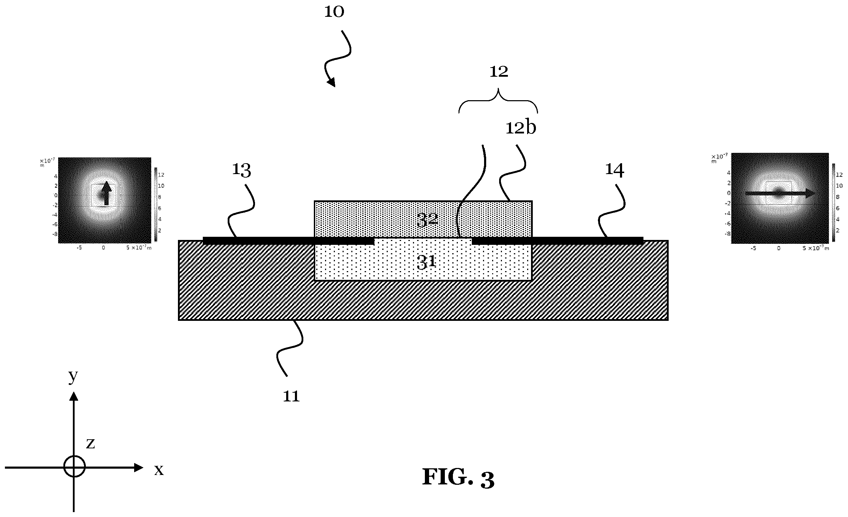

An exemplary embodiment of the electro-optical modulator 10 according to this disclosure is shown in a side-view in FIG. 3. Same elements in FIG. 3 and FIG. 1 are labelled with the same reference signs.

In the embodiment of FIG. 3, the waveguide core 12 of the modulator 10 comprises the first material 31, which has the non-zero off-diagonal electro-optic tensor coefficient. The first material 31 may be a Pockels material. A part of the first material 31 is arranged between the first electrode 13 and the second electrode 14. The waveguide core 12 of the modulator 10 may further comprise a second material 32, as shown in Fig. 3. The second material 32 may have a similar or an identical refractive index than the first material 31. The first material 31 may be arranged in a lower part 12a of the waveguide core 12. The second material 32 may be arranged in an upper part 12b of the waveguide core 12. The lower part 12a may be arranged in the cladding 11, and the upper part 12b may protrude from the cladding surface.

The two orthogonal modes of the light in the modulation region 20 may be the TM mode and the TE mode, which are schematically illustrated next to the modulator 10 (TM mode on the left side, and TE mode on the right side). The light is guided within the waveguide core 12 comprising the first material 31 and the second material 32 that matches the refractive index of the first material 31. The mode of the light can be switched by applying a voltage to the electrodes 13, 14 to produce the electric field 15. In particular, this may be an RF voltage and RF electric field 15 accordingly.

The modulators 10 of this disclosure shows a unique ability to combine highly confined RF electric fields 15 with low optical losses in the on-state of the modulator 10. This can be achieved by reducing the distance between the first electrode 13 and the second electrode 14 across the waveguide core 12 (e.g., in x-direction), for example, to a range of 10-100 nm. This compares to several μm for a conventional modulator. This short distance may boost the nonlinear conversion from above 1 Vmm (for a conventional modulator) to 0.1Vμm or less for the modulators 10 of this disclosure. The non-zero off-diagonal coefficient of the first material 31 (e.g., $r_{ij, i \neq j}$) allows an efficient orthogonal conversion from the, e.g., TM-polarized optical carrier to TE-polarized side bands.

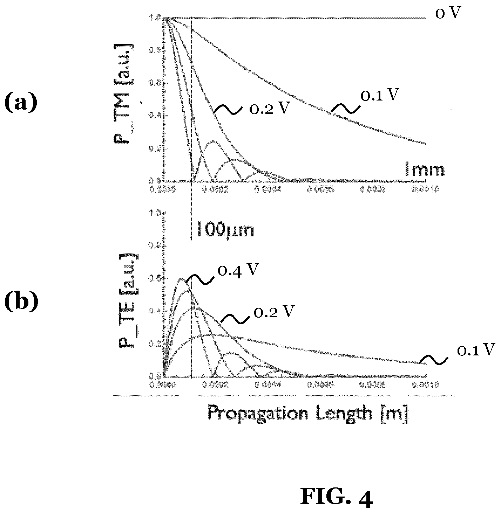

The energy carried by the two orthogonal modes of the light versus the propagation length of the light in the modulation region 20 is shown in FIG. 4. In particular, energy versus propagation length of the TM mode is shown in (a). In addition, energy versus propagation length of the TE mode is shown in (b). Before the modulation region 20, all energy of the light is in the TM mode in this case. The different curves in (a) and (b) represent different driving voltages of the electrodes 13, 14, to generate different electric fields 15. It can be seen that already a driving voltage of 0.4 V allows to convert all energy from the TM to the TE mode. Under 0 V the absorption of the TM mode is negligible, which enables large ER/IL ratios.

Low losses are achieved in the modulator 10, since the 2D material such as graphene is used to form the electrodes 13 and 14, respectively, wherein such 2D material only absorbs the in-plane polarized second mode, e.g., the TE mode (off-state of the modulator 10) while not affecting the out-of-plane polarized first mode, e.g. the TM mode (on-state of the modulator 10). This is, because the latter mode is specifically polarized perpendicular to the in-plane conductivity of the 2D material. This enables limited propagation losses for the first mode, while the propagation losses of the second mode may be orders of magnitude higher. The higher losses of the second mode are beneficial, as it allows efficiently absorbing light in the modulator's off-state.

Notably, the waveguide core symmetry (e.g., refractive index of the first material 31 and the second material 32 being matched; and/or the heights of the upper part 12b and the lower part 12a of the waveguide core 12 being the same or similar in the y-direction with respect to the 2D material plane) allows to achieve very low-losses for the first mode, as the longitudinal field component of this first mode can be engineered to feature an electrical field node at the position of the 2D material. For instance, the symmetry can be adjusted by increasing the upper part's 12a height while reducing its refractive index.

Two exemplary embodiments of the electro-optical modulator 10 according to this disclosure are shown in FIG. 5 in a side-view. Same elements in FIG. 1, FIG. 3 and FIG. 5 are labelled with the same reference signs.

In particular, FIG. 5(a) shows a modulator 10, which comprises the first material 31 and the second material 32 in the waveguide core 12. The first material 31 and the second material 31 are in this embodiment arranged symmetrically to the 2D material of the first electrode 13 and the second electrode 14, respectively, in the y-direction. The first material 31 forms the lower part 12a, and the second material 32 forms the upper part 12b of the waveguide core 12. The lower part 12a may also be smaller/narrower in the x-direction than the upper part 12b, as illustrated.

Further, FIG. 5(b) shows a modulator 10, which has only the first material 31 that completely forms the waveguide core 12. This modulator 10 shows best performance. The waveguide core 12 may have a width in the x-direction, which is larger than the gap between the first electrode 13 and the second electrode 14 in the x-direction, as illustrated. However, this is not mandatory.

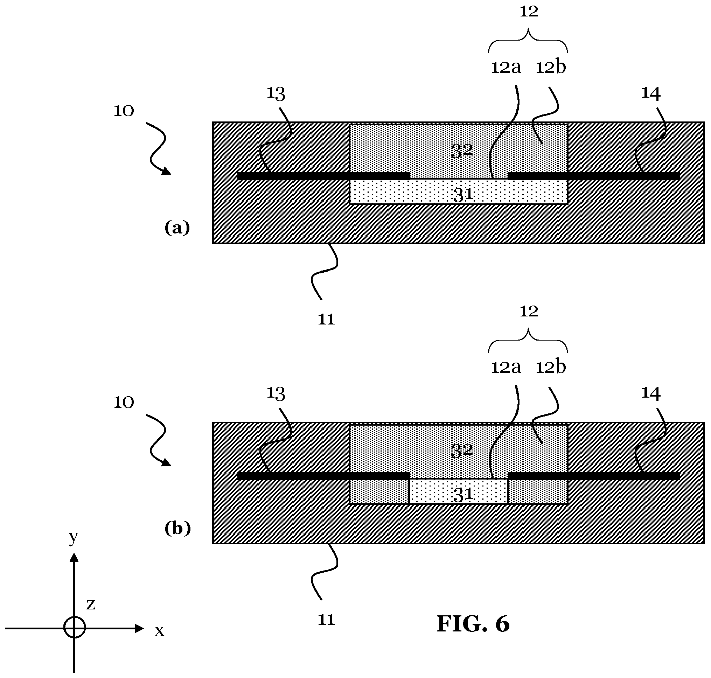

Two exemplary embodiments of the electro-optical modulator 10 according to this disclosure are shown in FIG. 6 in a side-view. Same elements in FIG. 1, FIG. 3 and FIG. 6 are labelled with the same reference signs.

In particular, FIG. 6(a) shows that the waveguide core 12 can be asymmetric in the y-direction with respect to the first and second electrodes 13,14. In particular, the height in the y-direction of the lower part 12a of the waveguide core 12 can be smaller than the height of the upper part 12b of the waveguide core 12 in the y-direction. The lower part 12a may comprise the first material 31, and the upper part 12b may comprise the second material 32. This modulator 10 of Fig. 6(a) may be optimized for minimum loss for the first mode, e.g., the TM mode. Moreover this modulator 10 may have a larger voltage-length product than the modulator shown in FIG. 5(b), for example.

FIG. 6(b) shows a modulator 10, which comprises an upper part 12b of the waveguide core 12 comprising the second material 32, and a lower part 12a comprising both the second material 32 and the first material 31. That is, the first material 31 may be only a fraction of the lower part 12a of the waveguide core 12, for example, may form 50% or less of the lower part 12a of the waveguide core 12.

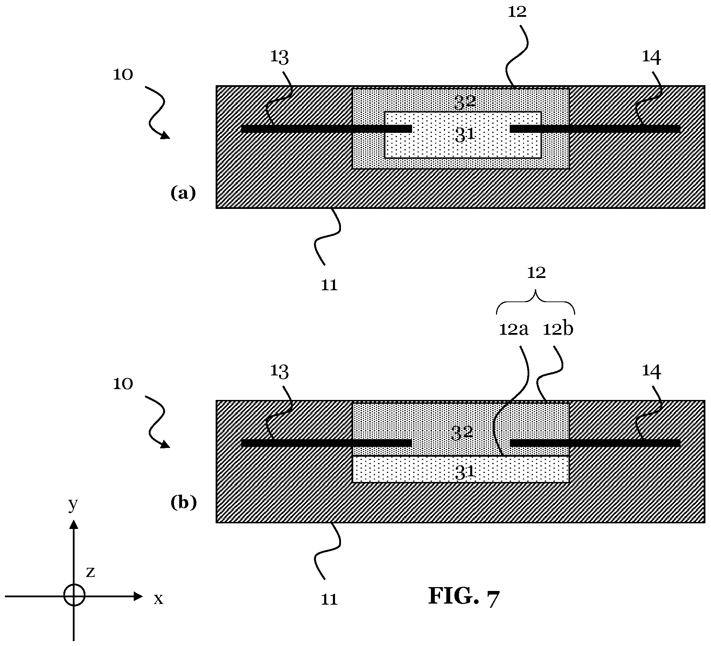

Two exemplary embodiments of the electro-optical modulator 10 according to this disclosure are shown in FIG. 7 in a side-view. Same elements in FIG. 1, FIG. 3 and FIG. 7 are labelled with the same reference signs.

FIG. 7(a) shows a modulator 10, which comprises a waveguide core 12 that comprises both the first material 31 and the second material 32. The first material 31 may be embedded into the second material 32, and may be arranged such that it is arranged between the first electrode 13 and the second electrode 14 in the x-direction.

FIG. 7(b) shows a modulator 10 with a waveguide core 12 that comprises a lower part 12a made of the first material 31, and an upper part 12b made of the second material 32. The first material 31 form only a fraction of the total height of the waveguide core 12 in the y-direction, in particular, it is arranged over 50% or less of the height of the waveguide core 12. For instance, as shown, the first material 31 may be arranged beneath the first electrode 13 and the second electrode 14 in the y-direction.

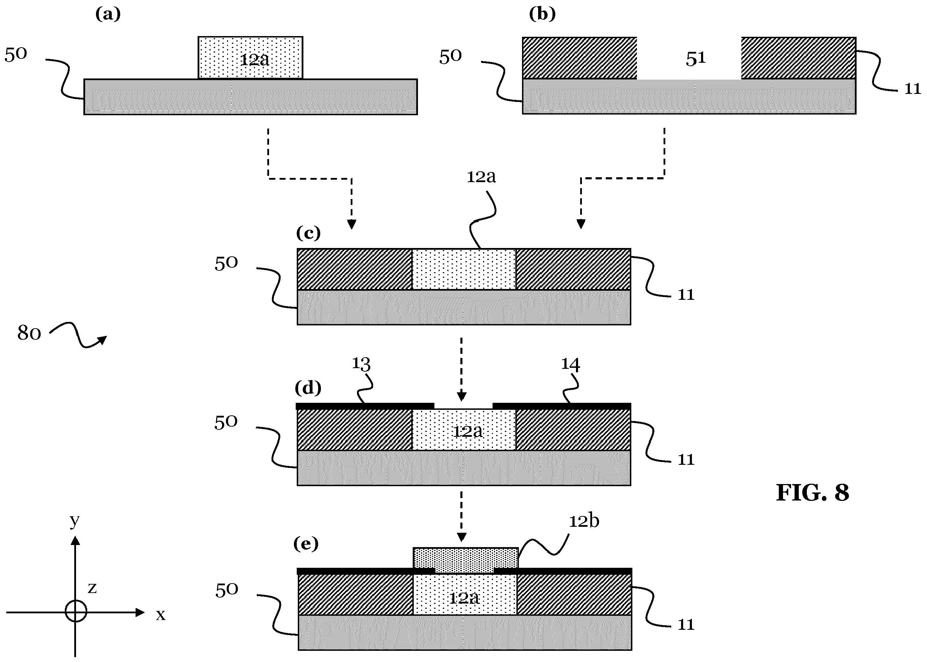

FIG. 8 shows a method 80 for fabricating an integrated electro-optical absorption modulator 10 according to this disclosure.

The method 80 starts with a first step, which has two alternative implementations. As shown in (a), the lower part 12a of the waveguide core 12 may be epitaxially grown and patterned on a silicon-based substrate 50, and can then be encapsulated with cladding 11 to reach (c). Alternatively, as shown in (b), the lower part 12a can be grown on a silicon-based substrate 50 and particularly into a trench 51 of a cladding 11, wherein the cladding 11 is provided on the silicon-based substrate 50, in order to reach (c). Then, the first electrode 13 and the second electrode 14 are formed on the surface of the cladding 11 and on a part of the lower part 12a of the waveguide core 12, in order to reach (d). Then, the upper part 12b of the waveguide core 12 is grown onto the lower part 12a of the waveguide core 12 and onto the parts of the first electrode 13 and the second electrode 14, which are formed on the lower part 12a of the waveguide core 12, to reach (e).

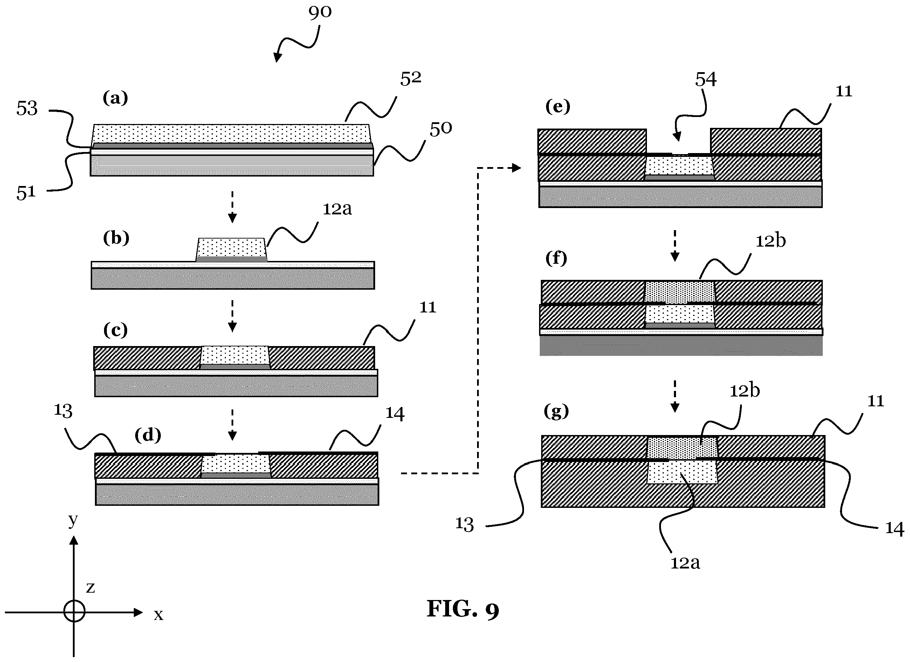

FIG. 9 shows another method 90 for fabricating a modulator 10 according to this disclosure.

The method 90 initially provides a silicon-based substrate 50, on which a dielectric layer 51, a strontium titanate (STO) layer 53, and a BTO layer 52 (as first material 31) are arranged one on the other in this order, as shown in (a). The STO layer 53 and the BTO layer 52 are then etched and formed into the dimensions (in x-direction and z-direction) of the lower part 12a of the later waveguide core 12, to reach (b). Then, a cladding 11 is deposited that surrounds the lower part 12a to reach (c). Then, the first electrode 13 and the second electrode 14 are formed on the surface of the cladding 11 and on the lower part 12(a) to reach (d). The 2D material may herein be transferred and patterned. The 2D material may also be deposited by atomic layer deposition (ALD). Then, a further cladding 11 is provided onto the first and second electrodes 13, 14, and a trench 54 is etched into the further cladding 11, to reach (e). Then, the trench 54 is filled with a material for forming the upper part 12b of the waveguide core 12, for instance, with the second material 32, to reach (f). Then, wafer bonding and removal of the silicon-based substrate 50 and the STO layer 52 may be performed to reach (g).

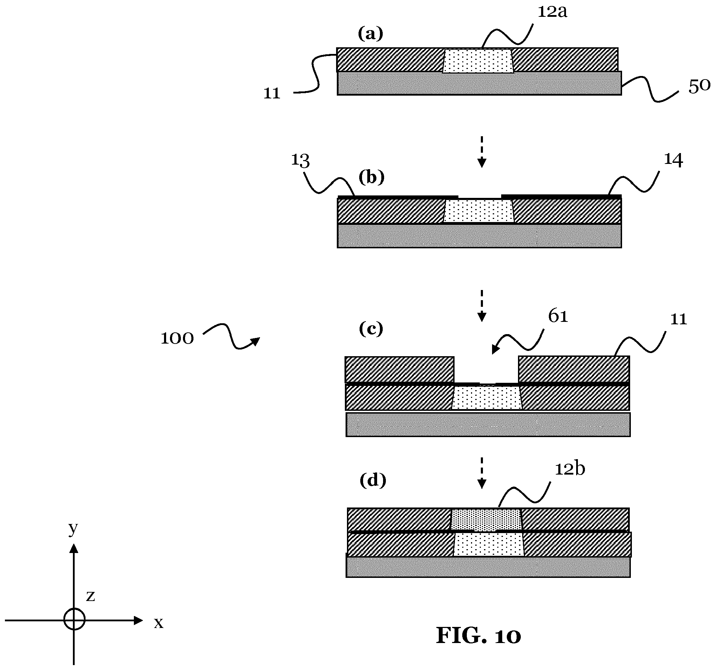

FIG. 10 shows another method 100 for fabricating a modulator 10 according to this disclosure.

First, a silicon-based substrate 50 is provided with a cladding 11 arranged on its surface, and with the lower part 12a of the waveguide core 12 already formed in the cladding 11, as shown in (a). Then, the first and the second electrode 13, 14 may be formed by, for example, transfer printing and patterning, or by ALD, to reach (b). Then, a further cladding 11 may be provided onto the electrodes 13, 14 and the lower part 12b, and a trench 61 is etched into this additional cladding 11 to reach (c). Then, the upper part 12b of the waveguide core 12 is formed in the trench 61, for instance, by growing second material 32, to reach (d).

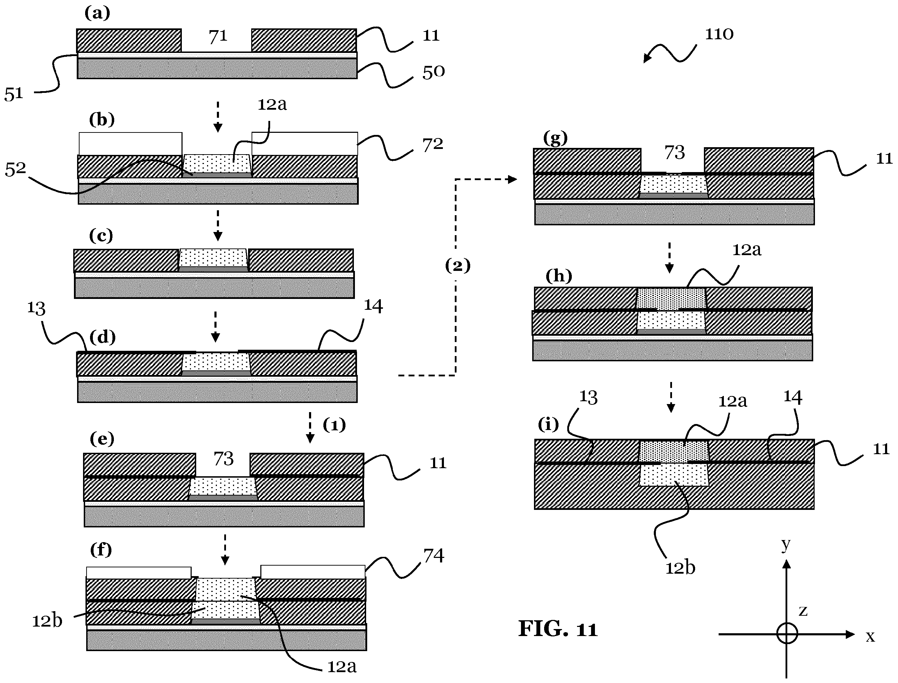

FIG. 11 shows another method 110 for fabricating a modulator 10 according to this disclosure.

At first, as shown in (a), a silicon-based substrate 50 with a dielectric layer 51 on its surface, and cladding 11 arranged on the dielectric layer 51 are formed along the y-direction The cladding 11 may be silicon oxide. A trench 71 is provided in the cladding 11. Then, STO 52 and BTO are grown in the trench 71 to form the lower part 12a of the waveguide core 12, and $\alpha$-BTO 72 is grown on the cladding 11, so as to reach (b). The $\alpha$-BTO 72 is then removed, for example, by CMP or etching, to reach (c). The first electrode 13 and the second electrode 14 are then formed, for instance, by ALD, on the surface of the cladding 11 and on the lower part 12a, to reach (d).

Then, in a first alternative (1) of the method 110, a further cladding 11 is deposited, for instance, by plasma-enhanced chemical vapor deposition (PECVD), and a trench 73 is etched into the cladding 11, wherein the trench 73 ends on the upper surface of the lower part 12b, to reach (e). Into this trench 73, a further BTO is grown, for instance, by molecular beam epitaxy (MBE) $\alpha$-BTO 74 is also grown on the cladding 11 to reach (f).

In a second alternative (2) of the method 110, the trench 73 is etched to reach (g), and then second material 32 is grown into the trench 73 to form the upper part 12b and to reach (h). The silicon-based substrate 50 and the dielectric layer 51 and the STO 52 are then removed to reach (i).

In summary, an idea of this disclosure is the combination of the 2D material, such as graphene as a transparent electrode material, for forming the electrodes 13, 14, with a material, like the first material 31, which allows a large light matter interaction with low-insertion loss. This may result in major advantages of the modulator 10 in terms of performance (e.g., the modulator 10 has a large ER/IL and has a small voltage-length-loss product). Contrary to conventional modulator implementations, which try to maximize the light interaction, this disclosure tries to minimize the light interaction with the 2D material, and to leverage the light matter interaction of the waveguide core material (e.g., the first material 31).

The modulator 10 may comprise a single graphene layer as the 2D material, and a gap between the first electrode 13 and the second electrode 13 (along the x-direction) can be patterned with a simple dry-etching process. To the contrary, other graphene work normally focuses on stacking multiple graphene sheets, which increases fabrication complexity and cost.

The interaction between two orthogonal modes normally requires a high-level of phase-matching, and thus devices using such interaction are sensitive to fabrication imperfections. This need is due to the small nonlinear interaction that requires device lengths on the order of millimeters to centimeters. To the contrary, the embodiments of the modulator 10 according to this disclosure feature very strong nonlinear interactions, and thus a sub 100 $\mu$m modulator becomes feasible. Such short lengths reduce the requirements on the fabrication accuracy. Furthermore, the non-dominant electro-optical tensor coefficient of the first material 31 can be used to adjust the effective refractive index of one polarization, without affecting the other.

A challenge may be that a short length results in a limited absorption by the 2D material of the second mode, which is polarized in-plane of the 2D material, for example the TE mode, within a short propagation distance. A solution for this may be incorporating multiple layers of the 2D material, or extending the modulator 10 by a photonic polarization splitter.

Normally, BTO grown, for instance, on silicon requires a STO seed layer to reduce propagation losses from dB/mm to dB/cm. Another advantage is that this disclosure enables short modulators 10 that can tolerate the dB/mm propagation losses, thereby enabling a simplified fabrication compared to conventional modulators.

In this disclosure, the word "comprising" does not exclude other elements or steps and the indefinite article "a" or "an" does not exclude a plurality. Further, the fact that certain features are recited in mutual different dependent claims does not indicate that a combination of these measures cannot be used in an advantageous implementation

**Claims**

1. An integrated electro-optical absorption modulator (10) comprising:

   a cladding (11);
   a waveguide core (12) arranged at least partly in the cladding (11) and configured to guide light along an extension direction (21) of the waveguide core (12); and
   a first electrode (13) and a second electrode (14) arranged on opposite sides of the waveguide core (11) and each formed of a two-dimensional, 2D, material on a surface of the cladding (11) or in the cladding (11);
   wherein each of the first electrode (13) and the second electrode (14) extends into the waveguide core (12); and
   wherein the first electrode (13) and the second electrode (14) are configured to apply an electric field (15) across a modulation region (20) of the waveguide core (11), and thereby to convert at least a part of the energy of the light in the modulation region (20) between two orthogonal modes, wherein one of the two orthogonal modes is polarized perpendicular to the plane of the 2D material.

2. The modulator (10) according to claim 1, wherein one of the two orthogonal modes is a transverse magnetic, TM, mode polarized perpendicular to a plane of the 2D material, and the other one of the two orthogonal modes is a transverse electric, TE, mode polarized in the plane of the 2D material.

3. The modulator (10) according to claim 1 or 2, wherein:
the waveguide core comprises a first material (31) having a non-zero off-diagonal electro-optic tensor coefficient, wherein at least a part of the first material (31) is arranged between the first electrode (13) and the second electrode (14).

4. The modulator (10) according to claim 3, wherein:
the waveguide core (11) further comprises a second material (32), the second material (32) having a similar or an identical refractive index than the first material (31).

5. The modulator (10) according to one of the claims 1 to 4, wherein:
the waveguide core (12) comprise a lower part (12a) arranged in a trench formed in the cladding (11) and an upper part (12b) protruding from the surface of the cladding (11).

6. The modulator (10) according to one of the claims 3 to 5, wherein:

the first material (31) is arranged at least in the lower part (12a) of the waveguide core (12); and/or
the second material (32) is arranged at least in the upper part (12b) of the waveguide core (12).

7. The modulator (10) according to claim 5 or 6, wherein:
a ratio of a height of the lower part (12a) to a height of the upper part (12b) of the waveguide core (12) measured from a center of the 2D material perpendicular to the plane of the 2D material is in a range of 0.75-1.25.

8. The modulator (10) according to one of the claims 3 to 7, wherein:
the first material (31) is barium titanate, for example, crystalline barium titanate.

9. The modulator (10) according to one of the claims 1 to 8, wherein:
the 2D material is graphene or a material with an anisotropic behavior being dielectric out-of-plane and conductive in-plane.

10. The modulator (10) according to one of the claims 1 to 9, wherein:
the cladding (11) is made of silicon oxide, a silicon-based oxide, and aluminum oxide, or a hafnium oxide.

11. The modulator (10) according to one of the claims 1 to 10, wherein:
the electric field (15) is substantially parallel to the plane of the 2D material.

12. The modulator (10) according to one of the claims 1 to 11, wherein:
the TM mode and the TE mode are phase-matched on the length of the modulation region (20) in the extension direction (21).

13. A method (80, 90, 100, 110) for fabricating an integrated electro-optical absorption modulator (10) according to one of the claims 1 to 12, the method (80, 90, 100, 110) comprising:

forming the cladding (11) and the waveguide core (12) at least partly in the cladding (11); and
forming the first electrode (13) and the second electrode (14) of the 2D material on the surface of the cladding (11) or in the cladding (11).

14. The method (80) according to claim 13, wherein the method (80) comprises:

epitaxially growing and patterning the lower part (12a) of the waveguide core (12) on a silicon-based substrate (50), and encapsulating the lower part (12a) of the waveguide core (12) with the cladding (11); or
epitaxially growing the lower part (12a) of the waveguide core on a silicon-based substrate (50) and into a trench (51) of the cladding (11) provided on the silicon-based substrate (50);
wherein the method (80) further comprises:

forming the first electrode (13) and the second electrode (14) on the surface of the cladding (11) and on a part of the lower part (12a) of the waveguide core (12); and
growing, using a mask, the upper part (12b) of the waveguide core (12) onto the lower part (12a) of the waveguide core (12) and the parts of the first electrode (13) and the second electrode (14) formed on the lower part of the waveguide core (12).

EP 4 270 100 A1

**FIG. 1**

**FIG. 2**

FIG. 3

**(a)**

**(b)**

FIG. 4

EP 4 270 100 A1

**FIG. 5**

**FIG. 6**

FIG.7

FIG. 8

EP 4 270 100 A1

FIG. 9

**FIG. 10**

FIG. 11

Europäisches
Patentamt

European
Patent Office

Office européen
des brevets

# EUROPEAN SEARCH REPORT

**Application Number**

EP 22 16 9881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GIROUARD PETER ET AL: "$\chi ^{(2)}$ Modulator With 40-GHz Modulation Utilizing BaTiO3 Photonic Crystal Waveguides", IEEE JOURNAL OF QUANTUM ELECTRONICS, IEEE, USA, vol. 53, no. 4, 1 August 2017 (2017-08-01), pages 1-10, XP011655495, ISSN: 0018-9197, DOI: 10.1109/JQE.2017.2718222 [retrieved on 2017-07-07] * the whole document * * * * * | 1-9,11, 13 | INV. G02F1/01 G02F1/015 |
| X | GB 2 441 790 A (QINETIQ LTD [GB]) 19 March 2008 (2008-03-19) * abstract; claim 25; figure 2 * * page 3, lines 21-29 * * page 5, lines 1-10 * * pages 12,16 * * page 14, lines 12-21 * | 1,2, 10-14 | |
| A | US 2020/064548 A1 (OGAWA KENSUKE [JP] ET AL) 27 February 2020 (2020-02-27) * abstract; figures 1,2 * * paragraphs [0058], [0070] - [0077] * | 1-14 | **TECHNICAL FIELDS SEARCHED (IPC)** G02F |
| A | MARSHALL OWEN ET AL: "Heterogeneous Integration on Silicon Photonics", PROCEEDINGS OF THE IEEE, IEEE. NEW YORK, US, vol. 106, no. 12, 1 December 2018 (2018-12-01), pages 2258-2269, XP011697708, ISSN: 0018-9219, DOI: 10.1109/JPROC.2018.2858542 [retrieved on 2018-11-19] * the whole document * | 1-14 | |

-/--

The present search report has been drawn up for all claims

| Place of search | Date of completion of the search | Examiner |
|---|---|---|
| The Hague | 7 October 2022 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 270 100 A1**

EUROPEAN SEARCH REPORT

Application Number

EP 22 16 9881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAHIM ABDUL ET AL: "Taking silicon photonics modulators to a higher performance level: state-of-the-art and a review of new technologies", ADVANCED PHOTONICS SPIE USA, SOCIETY OF PHOTO-OPTICAL INSTRUMENTATION ENGINEERS, 1000 20TH ST. BELLINGHAM WA 98225-6705 USA, vol. 3, no. 2, 1 March 2021 (2021-03-01), page 24003, XP060139906, ISSN: 2577-5421, DOI: 10.1117/1.AP.3.2.024003 [retrieved on 2021-04-29] * the whole document *<br>----- | 1-14 | |
| A | MA P ET AL: "Plasmonic Graphene Organic Hybrid Phase Modulator with 10 m Length, >70 GHz Bandwidth and 4.5 dB Insertion Loss", 2021 EUROPEAN CONFERENCE ON OPTICAL COMMUNICATION (ECOC), IEEE, 13 September 2021 (2021-09-13), pages 1-4, XP034026946, DOI: 10.1109/ECOC52684.2021.9605831 [retrieved on 2021-11-05] * the whole document *<br>----- | 1-14 | TECHNICAL FIELDS SEARCHED (IPC) |

The present search report has been drawn up for all claims

| Place of search | Date of completion of the search | Examiner |
|---|---|---|
| The Hague | 7 October 2022 | Beugin, Anne |

EPO FORM 1503 03.82 (P04C01)

page 2 of 2

## ANNEX TO THE EUROPEAN SEARCH REPORT
## ON EUROPEAN PATENT APPLICATION NO.

EP 22 16 9881

07-10-2022

| Patent document cited in search report | | Publication date | Patent family member(s) | | Publication date |
|---|---|---|---|---|---|
| GB 2441790 | A | 19-03-2008 | CA | 2667145 A1 | 20-03-2008 |
| | | | EP | 2064588 A1 | 03-06-2009 |
| | | | GB | 2441790 A | 19-03-2008 |
| | | | JP | 5416585 B2 | 12-02-2014 |
| | | | JP | 2010503047 A | 28-01-2010 |
| | | | TW | 200839347 A | 01-10-2008 |
| | | | US | 2010111303 A1 | 06-05-2010 |
| | | | WO | 2008032048 A1 | 20-03-2008 |
| US 2020064548 | A1 | 27-02-2020 | CN | 110865470 A | 06-03-2020 |
| | | | JP | 2020034610 A | 05-03-2020 |
| | | | US | 2020064548 A1 | 27-02-2020 |

EPO FORM P0459